# EUROPÄISCHE PATENTSCHRIFT

(11) **EP 2 393 620 B1**
(45) Veröffentlichungstag und Bekanntmachung des Hinweises auf die Patenterteilung: **18.11.2020**
(21) Anmeldenummer: 10700490.5
(22) Anmeldetag: 12.01.2010
(51) Int. Cl.: B22F 1/00, B22F 3/10, C08K 5/00, C04B 35/632, C04B 35/638, C04B 35/634, B22F 3/02

(54) **VERWENDUNG EINER MISCHUNG ZUR VERHINDERUNG VON OBERFLÄCHENFLECKEN UMFASSEND RUSSPARTIKEL AUF METALLISCHEN GESINTERTEN FORMTEILEN**
USE OF A MIXTURE FOR PREVENTING SURFACE STAINS COMPRISING SOOT PARTICLES ON METALLIC SINTERED PARTS
UTILISATION D'UN MÉLANGE POUR LA PRÉVENTION DES TACHES DE SURFACE COMPRENANT DES PARTICULES DE SUIE SUR DES PIÈCES MÉTALLIQUES FRITTÉES

(30) Priorität: 13.01.2009 DE 102009004829
(43) Veröffentlichungstag der Anmeldung: 14.12.2011
(73) Patentinhaber: GKN Sinter Metals Holding GmbH, 42477 Radevormwald (DE)
(72) Erfinder: LINDENAU, René, 42477 Radevormwald (DE); WIMBERT, Lars, 58332 Schwelm (DE)
(74) Vertreter: Rössler, Matthias
(86) Internationale Anmeldenummer: PCT/EP2010/000092
(87) Internationale Veröffentlichungsnummer: WO 2010/081667

(56) Entgegenhaltungen:
- US-A- 5 290 336
- US-A- 6 051 619
- US-A1- 2003 220 424
- US-A1- 2004 138 049
- US-A1- 2007 077 164
- US-A1- 2007 117 912

## Beschreibung

Die vorliegende Erfindung betrifft eine sinterfähige Pulvermischung mit einer Mischung und/oder einem Mischungskonzentrat, umfassend mindestens ein Presshilfsmittel und mindestens ein Zusatzmittel, als auch die Verwendung von Substanzen zur Verhinderung von Oberflächenflecken..

Gesinterte Formteile, gleich ob aus metallischen oder aus Kunststoffteilen hergestellt, und gleich mittels welcher Verfahren (beispielsweise übliche Pressverfahren oder Kunststoff- beziehungsweise Metallspritzgießen (MIM)) finden vielfach Anwendung in der Industrie, da zum einen selbst komplizierte Formen mit hoher Formgenauigkeit und hoher Stabilität in Großserie hergestellt werden können und zum anderen, da mit der Anwendung von Sinterverfahren hohe Energieeinsparungen einhergehen. Aus einer sinterbaren Pulvermischung wird dabei üblicherweise zunächst ein vorverpresstes Formteil, auch Grünling bezeichnet, hergestellt, welches in einem Sinterschritt zu einem stabilen und formgenauen Formteil umgewandelt wird. Dabei werden üblicherweise in der sinterbaren Pulvermischung Presshilfsmittel eingesetzt. Oft handelt es sich dabei um Verbindungen wie Metallstearate, Amidwachse, einschließlich Fettsäureamide oder ähnliche, die die Gleitfähigkeit und/oder die Verdichtbarkeit verbessern. Andere Presshilfsmittel oder solche, die auch die Gleitfähigkeit und/oder Verdichtbarkeit verbessern, verleihen dem Grünling eine gewisse Formstabilität, insbesondere Grünfestigkeit, für die weitere Bearbeitung vor dem und im Sinterschritt. In aller Regel wird vor dem Sinterschritt oder im Sinterschritt selbst das Presshilfsmittel durch Ausbrennen entfernt.

Während des Sintervorganges erhält der vorgepresste Grünling durch die Verbindung der einzelnen Pulverpartikel eine erhöhte Festigkeit und Härte. Je nach Zusammensetzung der eingesetzten Mischung, Ausbrenntechnik des Sinterofens und Dichte der Bauteile kommt es vor allem bei Presshilfsmitteln mit sehr guter Schmierwirkung zur Bildung von oberflächlichen Flecken mit unter Umständen sehr hohem Kohlenstoffanteil ("Rußflecken"). Diese werden vermutlich durch eine Pyrolyse der eingesetzten Presshilfsmittel auf der Bauteiloberfläche hervorgerufen, sei es beim eigentlichen Sinterschritt, sei es in einem vorangehenden Erwärmungsschritt mit Temperaturen deutlich oberhalb des Schmelzpunktes des Presshilfsmittels, um dieses zu entfernen (Entbinderung).

US 2007/0117912 A1 offenbart eine Kunststoffmischung, mit welcher eine Reduzierung von Styrolmonomeren in Polystyrolharzen ermöglicht ist. Dabei offenbart US 2007/0117912 A1 den Einsatz von Kohlenwasserstoffwachsen als auch den Einsatz von Carbonsäurekonzentraten zur Verminderung der Styrolmonomeren und von Toluol in der Kunststoffmischung.

US 5,290,336 offenbart eine eisenbasierte metallurgische Pulverzusammensetzung mit einem verbesserten Bindemittel, umfassend zweibasige organische Säuren sowie weitere Verbindungen wie feste Polyether, flüssige Polyether und Acrylharze. Die entsprechende Pulverzusammensetzung soll die Eigenschaften des Grünlings verbessern und die Ausstoßkräfte aus der Form reduzieren.

US 6,051,619 ist auf ein Feinguss-Verfahren gerichtet, wobei Ammoniumsalze von Carbonsäuren einem Schäummittel zugegeben werden. Das Schäummittel verbessert die Herstellung von gesinterten Formen. Dazu wird das Schäummittel zusammen mit einem Polymer in eine Metallform gespritzt und nach Abkühlung entformt. Das so hergestellte Modell wird mit einem sinterfähigen Material beschichtet zur Herstellung einer Form und bei einem nachfolgenden Sintervorgang aus dieser Form ausgebrannt. Die Ammoniumsalze der Carbonsäuren sollen die Entstehung von Ascherückständen in der Form verhindern.

US 2007/077164 A1 offenbart eine sinterfähige Pulvermischung zur Herstellung gesinterter Formteile.

Aufgabe der vorliegenden Erfindung ist es daher, eine sinterfähige Pulvermischung mit einer Mischung und/ oder einem Mischungskonzentrat zur Verfügung zu stellen, die zumindest eine Reduzierung bzw. Abschwächung der Oberflächenflecken ermöglicht.

Diese Aufgabe wird erfindungsgemäß gelöst durch eine Verwendung einer sinterfähigen Pulvermischung gemäß Patentanspruch 1.

Die Mischung, für die Herstellung gesinterter Formteile, umfasst mindestens ein Presshilfsmittel und mindestens ein Zusatzmittel, wobei das Zusatzmittel ausgewählt ist aus einer Gruppe von Substanzen, welche freisetzbares Kohlendioxid aufweisen.

Als Presshilfsmittel im Sinne der vorliegenden Erfindung können prinzipiell jegliche dem Fachmann bekannte und bei der Herstellung gesinterte Formteile eingesetzte presserleichternde Mittel oder Mischungen zum Einsatz kommen, soweit durch diese die Gleitfähigkeit und/oder Verdichtbarkeit von Pulverpartikeln verbessert und/oder dem Grünling eine gewisse Formstabilität für die weitere Bearbeitung verliehen und/oder diese zu einer Veränderung und/oder Verbesserung der Fließfähigkeit des zu verdichtenden Pulvers führen. Dabei handelt es sich im Sinne der vorliegenden Erfindung um solche Presshilfsmittel, welche Kohlenstoff aufweisen, mithin insbesondere um organische Presshilfsmittel oder deren Metallsalze, welche bei einer Pyrolyse Kohlenstoff bilden. Besonders bevorzugte Presshilfsmittel im Sinne der vorliegenden Erfindung sind ausgewählt aus einer Gruppe umfassend Polyvinylacetate, Fettsäurealkohole und/oder deren Salze, Wachse, wachsähnliche Substanzen, Polyethylenglykole, Polyethylenoxide, Ester und/oder Salze von Fettsäuren, Amine, Amide und/oder Amidwachse und/oder deren Salze, einschließlich Fettsäureamide, oder Mischungen der genannten Substanzen. Wachsähnliche Substanzen im Sinne der vorliegenden Erfindung sind solche, welche mindestens 4, bevorzugt mindestens 5 der nachfolgenden Eigenschaften aufweisen:
a. bei 20 °C knetbar, fest oder brüchig
b. grob- oder feinkristallin
c. durchscheinend bis opak, jedoch nicht glasartig
d. oberhalb von 40°C ohne Zersetzung schmelzbar
e. knapp oberhalb des Schmelzpunktes leicht flüssig (niedrigviskos)
f. stark temperaturabhängige Konsistenz und Löslichkeit
g. unter leichtem Druck polierbar

Carnaubawachse im Sinne der vorliegenden Erfindung sind Pflanzenwachse, welche üblicherweise eine Dichte in einem Bereich von etwa 0,99 g/cm³ bis etwa 0,999 g/cm³ und einen Schmelzpunkt insbesondere in einem Bereich von etwa 83 °C bis etwa 86 °C aufweisen. Carnaubawachse werden insbesondere aus den Blättern der brasilianischen Fächerpalme gewonnen. Beispielhafte Carnaubawachse enthalten etwa 85 Gew.-% Ester von Wachssäuren, ω-Hydroxycarbonsäuren beziehungsweise Zimtsäure mit Wachsalkoholen und Diolen bezogen auf die Gesamtmenge des Wachses beziehungsweise der Wachsmischungen. Darüber hinaus können Carnaubawachse auch bis etwa 5 Gew.-%, bezogen auf die Gesamtmenge, freie Wachssäuren, insbesondere Carnauba-Cerotinsäure, des Weiteren Alkohole und Diole, Kohlenwasserstoffe und Mineralstoffe enthalten. Es können auch Mischungen unterschiedlicher Carnaubawachse im Sinne der vorliegenden Erfindung eingesetzt werden.

Bevorzugt weisen dabei die Carnaubawachse im Sinne der vorliegenden Erfindung eine Jod-Zahl in einem Bereich von etwa 8,5 bis 10,5 auf, des Weiteren liegt die Säurezahl der Carnaubawachse im Sinne der vorliegenden Erfindung bevorzugt in einem Bereich von etwa 1 bis etwa 4, und des Weiteren die Verseifungszahl in einem Bereich von etwa 70 bis etwa 83.

Amide, einschließlich Fettsäureamide (vor allem Monoamide von gesättigten und/oder ein- oder mehrfach ungesättigten Fettsäuren) und Amidwachse, im Sinne der vorliegenden Erfindung sind insbesondere ausgewählt aus einer Gruppe umfassend primäre, sekundäre und/oder tertiäre Amide. Weiter bevorzugt weisen Fettsäureamide im Sinne der vorliegenden Erfindung mindestens einen Alkylrest mit 4 bis 25 Kohlenstoffatomen, bevorzugt 5 bis 21 Kohlenstoffatomen, auf. Besonders bevorzugt ist ein primäres Amid mit einem Alkylrest mit 5 bis 21 Kohlenstoffatomen. Im Sinne der vorliegenden Erfindung können auch Mischungen unterschiedlicher Amide dem Presshilfsmittel zugesetzt werden, wobei die Mischung vorzugsweise ausschließlich primäre Amide enthält. In der Mischung kann insbesondere die Kettenlänge des Alkylrestes in einem Bereich von 4 bis 25, bevorzugt 5 bis 21 Kohlenstoffatomen liegen.

Bevorzugt im Sinne der vorliegenden Erfindung sind als Presshilfsmittel eingesetzt Ester und/oder Esterwachse oder deren Derivate, besonders bevorzugt Ester aus Monocarbonsäuren mit 5 bis 21 Kohlenstoffatomen und ein- oder mehrwertigen Alkoholen, insbesondere Glycerinmonostearat oder Derivate hiervon.

Im Sinne der vorliegenden Erfindung werden als Zusatzmittel, ausgewählt aus einer Gruppe von Substanzen, welche freisetzbares Kohlendioxid aufweisen, solche Substanzen verstanden, welche unter Energiezufuhr gleich welcher Art, bevorzugt der Zufuhr von thermischer oder Strahlenenergie, Kohlendioxid abspalten, das heißt freisetzen, beziehungsweise bei ihrer Zersetzung ausschließlich oder unter anderem in Kohlendioxid zerfallen. Eine Verbrennung von chemischen Substanzen in Gegenwart von Sauerstoff fällt jedoch nicht hierunter. Aber auch eine chemisch induzierte Freisetzung wäre möglich beispielsweise bei Zugabe weiterer Hilfssubstanzen zu der erfindungsgemäßen Mischung, welche eine chemische Reaktion mit mindestens einem Zusatzmittel der erfindungsgemäßen Mischung eingehen und dabei Kohlendioxid freisetzen. Besonders bevorzugt ist dabei im Sinne der vorliegenden Erfindung das Zusatzmittel ausgewählt aus einer Gruppe von Substanzen, welche in der Lage sind, Oberflächenflecken, welche Rußpartikel umfassen, auf aus mindestens einem Kunststoff- und/oder metallischem Material hergestellten gesinterten Formteilen zu reduzieren. Reduzieren ist hier im Sinne einer Verminderung, und nicht einer chemischen Reduktionsreaktion zu verstehen.

Laut der Erfindung sind die als Zusatzmittel einsetzbaren Carbonsäuren und/oder deren Derivate ausgewählt aus einer Gruppe umfassend Verbindungen mit mindestens drei Carboxygruppen, bevorzugt mindestens vier Carboxygruppen. Besonders bevorzugt sind die Carbonsäuren ausgewählt aus einer Gruppe umfassend Zitronensäure und/oder deren Derivate.

Als sinterbare Formteile im Sinne der vorliegenden Erfindung werden einerseits Formteile verstanden, welche vollständig aus einem sinterfähigen Material hergestellt werden. Andererseits werden hierunter auch Verbundteile verstanden, wobei der Grundkörper eines derartigen Verbundteils beispielsweise aus einer aluminium- oder eisenhaltigen Mischung hergestellt sein kann, und der mit dem Grundkörper weiter verbundene Körper aus einem weiteren Material, beispielsweise Gussstahl, gesintert oder massiv, oder aus massivem Aluguss hergestellt sein kann. Umgekehrt kann das Verbundteil auch beispielsweise lediglich auf den Stirnseiten oder seiner Oberfläche eine gesinterte Schicht aus einer beispielsweise aluminium- oder keramikhaltigen Mischung aufweisen, wohingegen der Grundkörper als beispielsweise Stahl oder Gusseisen, gesintert oder massiv, hergestellt ist. Die gesinterten Formteile können dabei kalibriert und/oder ausgehärtet in der Wärme sein. Metallische Materialien zur Herstellung gesinterter Formteile im Sinne der vorliegenden Erfindung sind insbesondere Pulver- beziehungsweise Mischungen aus metallischen und/oder keramischen Bestandteilen. Beispielsweise können niedrig legierte Stähle, Chrom-Nickel-Stähle, Bronzen, Nickelbasislegierungen wie Hastalloy, Inconel, Metalloxide, Metallnitride, Metallsilizide oder dergleichen, allein oder in beliebiger Mischung miteinander, eingesetzt werden. Das verwendete Pulver und seine Teilchengröße ist vom jeweiligen Einsatzzweck abhängig, wobei die Wahl dem angesprochenen Fachmann bekannt ist. Beispielhafte eisenhaltige Pulver sind die Legierung 316 L, 404 L, Inconel 600, Inconel 625, Monel, Hastalloy BX und/oder C sowie Distalloy DH1. Besonders bevorzugt sind niedrig legierte Stahlpulver von einfachen Fe-C-Mischungen bis hin zu beispielsweise Distaloy HP (Höganäs AB, Schweden). Dabei können selbstverständlich auch Mischungen der vorgenannten Pulver eingesetzt werden.

Die Mischung weist den großen Vorteil auf, dass Oberflächenflecken auf gesinterten Formteilen reduziert werden können in der Anzahl und/oder der Stärke, wobei sogar eine vollständige Unterdrückung derselben möglich ist. Ursächlich hierfür mag sein, dass das so genannte Boudouard-Gleichgewicht dafür sorgt, dass Kohlendioxid aus dem Zusatzmittel insbesondere während des Aufheizens in der Ausbrennzone des Sinterofens im Sinterschritt oder aber im vorgelagerten Entwachsungsschritt freigesetzt wird, welches mit den in den Oberflächenpartikeln enthaltenen Rußpartikeln unter Umsetzung zu gasförmigem Kohlenmonoxid reagiert. Gesinterte Formteile, die unter Einsatz der erfindungsgemäßen Mischung hergestellt werden, zeichnen sich durch nahezu fleckenfreie oder gar fleckenfreie Oberflächen aus, die selbst höchsten optischen Anforderungen entsprechen.

Besonders bevorzugt weist die Mischung mindestens ein Zusatzmittel in einer Menge von etwa 1 Gew.-% bevorzugt etwa 3 Gew.-% bis etwa 90 Gew.-%, bezogen auf die Gesamtmenge der Mischung auf. Besonders bevorzugt ist das Zusatzmittel in einer Menge von etwa 8 Gew.-% bis etwa 80 Gew.-%, weiter bevorzugt in einer Menge von etwa 10 Gew.-% bis etwa 75 Gew.-% in der erfindungsgemäßen Mischung enthalten.

Soweit in der vorliegenden Erfindung Bereiche oder Zahlenwerte angegeben werden, ist durch den Zusatz des Wortes "etwa" verdeutlicht, dass es sich bei den oberen und den unteren Bereichsgrenzen nicht um absolute Werte handelt, es ist vielmehr für den angesprochenen Fachmann ersichtlich, dass der Erfolg der vorliegenden Erfindung auch bei Abweichungen von den zahlenmäßig definierten Ober- und Untergrenzen noch erreicht werden kann. Dabei kann der abweichende Bereich um bis zu 5 % von den abgegebenen Ober- und/oder Untergrenzen differieren.

Besonders bevorzugt im Sinne der vorliegenden Erfindung ist das Presshilfsmittel ausgewählt aus einer Gruppe umfassend mindestens ein Carnaubawachs weiter bevorzugt zusätzlich mindestens ein primäres Fettsäureamid und/oder einen primären Fettsäureester. In einer besonders bevorzugten Ausführungsform der vorliegenden Erfindung umfasst die erfindungsgemäße Mischung Carnaubawachs als Presshilfsmittel und Zitronensäure oder deren Derivate, bevorzugt Zitronensäure-Monohydrat, als Zusatzmittel neben möglichen weiteren Bestandteilen, wobei insbesondere weitere Bestandteile wie beispielsweise Aerosile, Graphit, Molybdänsulfid et cetera, welche dem auf dem Gebiet der Pulvermetallurgie tätigen Fachmann bekannt sind, zugegen sein können.

Das Mischungskonzentrat zeichnet sich dadurch aus, dass es das mindestens eine Zusatzmittel in einer Menge von etwa 35 Gew.-% bis etwa 90 Gew.-%, bezogen auf die Gesamtmenge des Mischungskonzentrates, aufweist. Hierdurch ist es möglich, eine "Mastermischung" herzustellen, welche mindestens einem weiterem Presshilfsmittel zugesetzt werden kann. Dieses weitere oder zweite Presshilfsmittel beziehungsweise Presshilfsmittelmischung kann dabei identisch zu dem ersten Presshilfsmittel sein, welches in dem Mischungskonzentrat zugegen ist, beziehungsweise kann es Bestandteil des eingesetzten ersten Presshilfsmittels sein, sollte dieses eine Mischung unterschiedlicher Presshilfsmittel darstellen.

Das Mischungskonzentrat weist bevorzugt mindestens etwa 50 Gew.-% des mindestens einen Zusatzmittels, bevorzugt mindestens etwa 60 Gew.-%, noch weiter bevorzugt mindestens etwa 65 Gew.-%, ausgewählt aus einer Gruppe umfassend mindestens zwei Carboxygruppen, und mindestens ein Presshilfsmittel, ausgewählt aus einer Gruppe umfassend Polyvinylacetate, Fettsäurealkohole und/oder deren Salze, Wachse, wachsähnliche Substanzen, Polyethylenglykole, Polyethylenoxide, Ester und/oder Salze von Fettsäuren, Amine, Amide und/oder Amidwachse und/oder deren Salze, einschließlich Fettsäureamide, oder Mischungen der genannten Substanzen auf. Weiter bevorzugt weist das erfindungsgemäße Konzentrat mindestens etwa 50 Gew.-% Zitronensäure oder deren Derivate, bevorzugt Zitronensäure-Monohydrat, als Zusatzmittel, bevorzugt mindestens etwa 60 Gew.-%, noch weiter bevorzugt mindestens etwa 65 Gew.-%, bezogen auf die Gesamtmenge des Konzentrates, auf, wobei die Restmenge gebildet ist aus Carnaubawachs als Presshilfsmittel.

Weiter umfasst die sinterfähige Pulvermischung mindestens ein metallisches Pulvermaterial. In einer weiter bevorzugten Ausführungsform der vorliegenden Erfindung ist in der sinterfähigen Pulvermischung das mindestens eine metallische Material in einer Menge von mindestens 80 Gew.-% in der Mischung enthalten, bevorzugt in einer Menge von mindestens etwa 90 Gew.-%, noch weiter bevorzugt in einer Menge von mindestens etwa 95 Gew.-%, jeweils bezogen auf die Gesamtmenge der Mischung.

Darüber hinaus kann die Mischung weiterhin Kohlenstoff enthalten, bevorzugt in einer Menge in einem Bereich von mindestens etwa 0,3 Gew.-%, weiter bevorzugt etwa 0,4 Gew.-% bis etwa 1,4 Gew.-%, bevorzugt maximal etwa 3 Gew.-%, jeweils bezogen auf die Gesamtmenge der erfindungsgemäßen sinterfähigen Pulvermischung, zur Bildung unterschiedlicher Legierungen,.

In einer bevorzugten Ausführungsform der vorliegenden Erfindung ist das mindestens eine Zusatzmittel in einer Menge von etwa 0,005 Gew.-% bis etwa 2 Gew.-%, bezogen auf die Gesamtmenge der sinterfähigen Mischung. In der sinterfähigen Pulvermischung ist vorzugsweise die Mischung, umfassend mindestens ein Presshilfsmittel und mindestens ein Zusatzmittel, in einer Menge von etwa 0,2 Gew.-% bis etwa 8 Gew.-%, weiter bevorzugt in einer Menge von etwa 0,3 Gew.-% bis etwa 1,8 Gew.-% enthalten.

Es wird weiter ein Verfahren zur Herstellung einer Mischung oder eines Mischungskonzentrates vorgeschlagen, wobei das mindestens eine Zusatzmittel und das mindestens eine Presshilfsmittel zusammengeschmolzen werden und anschließend die erhaltene Mischung zu Pulver verarbeitet wird. Bevorzugt wird dabei die Mischung zu einem Pulver mit einer Korngröße von etwa < 500 µm, weiter bevorzugt etwa < 200 µm, noch weiter bevorzugt etwa < 150 µm abgesiebt. In einem alternativen Herstellungsverfahren wird die Mischung oder das Mischungskonzentrat hergestellt in einem ersten Schritt, indem eine erste Mischung mit mindestens etwa 30 Gew.-% mindestens eines Zusatzmittels, bezogen auf die Gesamtmenge der ersten Mischung, der Rest umfassend mindestens ein erstes Presshilfsmittel, hergestellt wird, und in einem zweiten Schritt die erste Mischung in mindestens ein zweites Presshilfsmittel eingebracht wird. Das erste und das zweite Presshilfsmittel können dabei verschieden oder aber auch identisch sein, insbesondere kann das mindestens ein erstes Presshilfsmittel auch eine Mischung solcher darstellen, wobei das zweite Presshilfsmittel in dieser Mischung enthalten sein kann. Des Weiteren kann auch das zweite Presshilfsmittel selbst eine Mischung verschiedener Presshilfsmittel sein, und ein Bestandteil derselben kann ein erstes Presshilfsmittel darstellen oder aber von einer Mischung erster Presshilfsmittel umfasst sein. Bei diesem alternativen Verfahren wird somit zunächst ein Mischungskonzentrat mit einem hohen Anteil des Zusatzmittels hergestellt, welches dann in einem zweiten Schritt in mindestens ein zweites Presshilfsmittel eingebracht wird. Dies hat den Vorteil einer guten Handhabbarkeit der Mischung beziehungsweise des Mischungskonzentrates. Der hohe Anteil an Zusatzmittel sorgt dafür, dass Rußflecken, welche durch eine Pyrolyse des im Mischungskonzentrat enthaltenden ersten Presshilfsmittels oder Presshilfsmittelmischung hervorgebracht werden können, zumindest überwiegend unterdrückt werden, aber auch aufgrund der hohen Konzentration auch eine überwiegende Unterdrückung von Oberflächenflecken erfolgt, welche durch das mindestens ein zweites Presshilfsmittel bei dessen Pyrolyse erzeugt werden, oder aber durch die Pyrolyse des ersten und/oder zweiten Presshilfsmittels oder Presshilfsmittelmischung.

Es ist jedoch auch jede andere Herstellungsmethode zur Herstellung der Mischung oder des Mischungskonzentrates denkbar, beispielsweise kann anstatt eines Zusammenschmelzens lediglich ein Warmmischen der von der Mischung umfassten Komponenten erfolgen, oder aber beispielsweise kann das Zusatzmittel, insbesondere in Form von Zitronensäure oder Zitronensäure-Monohydrat in gelöster Form, das heißt als wässrige Lösung oder Lösung in einem sonstigen organischen Lösemittel, in das mindestens eine Presshilfsmittel eingebracht sein, und anschließend das Lösemittel verdampft werden.

Des Weiteren betrifft die Offenbarung die Verwendung einer sinterfähigen Pulvermischung zur Herstellung gesinterter Formteile. Schließlich betrifft die Offenbarung die Verwendung von mindestens einer Substanz ausgewählt aus einer Gruppe umfassend organische Carbonsäuren und/oder deren Derivate, zur Verhinderung von Oberflächenflecken, welche Rußpartikel umfassen, auf gesinterten Formteilen. Die entsprechenden Substanzen sind dabei aus einer Gruppe umfassend Verbindungen mit mindestens drei Carboxygruppen ausgewählt.

Diese und weitere Vorteile werden anhand der nachfolgenden Beispiele und Figuren näher beschrieben. Es zeigt:

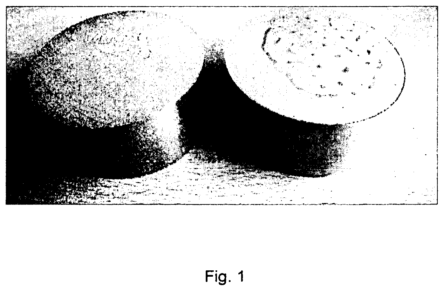

- Fig. 1:: Bildliche Darstellung eines Formteiles hergestellt mit einem Presshilfsmittel ohne Zusatzmittel nach dem Stand der Technik mit Oberflächenflecken als auch ein erfindungsgemäß hergestelltes gesintertes Formteil ohne Oberflächenflecken.

### Beispiel

Es wurden zunächst eine Mischung a) aus einem Carnaubawachs mit der Produktbezeichnung Carnaubawachs Flakes F (technische Anwendung) der Benecke GmbH, Hamburg, in einer Menge von 54 Gew.-%, bezogen auf die Gesamtmenge der Mischung, mit einem Fettsäureamidwachs mit einem Schmelzpunkt von 150 °C mit der Produktbezeichnung LUBA-print Wachs 467/E des Herstellers L.B. Bader & Co. GmbH, Rottweil, Deutschland in einer Menge von 36 Gew.-% mit 10 Gew.-% Zitronensäure-Monohydrat als Zusatzmittel, bezogen von Acros Organics, Geel, Belgien, hergestellt. Dabei wurde die Wachskomponente aus Carnaubawachs und Fettsäureamidwachs zuerst getrennt hergestellt durch gemeinsames Schmelzen des Carnaubawachses mit dem Fettsäureamidwachs, Erstarren der Schmelze und mit gegebenenfalls nachfolgendem Kühlen und anschließendes Konfektionieren oder Fraktionieren der Schmelze zu einem Pulver. Dieser Wachskomponente wurde dann zusammen mit der Zitronensäure-Monohydrat zusammengeschmolzen und anschließend die so erhaltene Mischung nach Abkühlen gemahlen und auf eine Korngröße entsprechend der Partikelgröße von < 125 µm abgesiebt. Diese Mischung a) wurde mit 96,78 Gew.-% sinterbaren Metallpulver AS1000B der Firma Hoeganaes Corp., USA, 2 Gew.-% Kupfer, 0,6 Gew.-% Kohlenstoff und 0,02 Gew.-% des Aerosils Aerosil®200C der Degussa AG, Düsseldorf, Deutschland gemischt, wobei die Mischung a) in einer Menge von 0,6 Gew.-% beigesetzt wurde, wohin sich die Gew.-% ergeben jeweils auf die Gesamtmenge der sinterfähigen Pulvermischung beziehen.

Die solchermaßen hergestellte sinterfähige Pulvermischung, welche Mischung a) umfasst, wurde in ein übliches Presswerkzeug eingefüllt und bei einem Druck von 800 MPa und einer Temperatur von 65 °C zu Zylindern mit einem Durchmesser von 60 mm und einer Höhe von 30 mm gepresst. Die solchermaßen erhaltenen Grünlinge wurden nachfolgend in einem Sinterofen, welcher als Bandofen ausgestaltet war, zunächst bei einer Temperatur von 700 °C entwachst und anschließend bis zu einer Temperatur von 1120 °C mindestens 20 Minuten gesintert. Nach dem Abkühlen der Teile wurden die Zylinder dem Ofen entnommen und visuell begutachtet. Die solchermaßen erhaltenen Zylinder ist in Fig. 1 links dargestellt, und wies keinerlei Oberflächenflecken auf.

Es wurde des Weiteren ein Vergleichsversuch durchgeführt, wobei eine Mischung b) hergestellt wurde, welche im Unterschied zur Mischung a) keinerlei Zitronensäure-Monohydrat oder sonstige erfindungsgemäße Zusatzmittel enthielt. Ansonsten wurden Zylinder unter den gleichen Bedingungen hergestellt wie vorstehend beschrieben. Das solchermaßen hergestellte gesinterte Formteil ist in der Fig. 1 rechts als Stand der Technik angegeben und zeigt Oberflächenrußflecken, welche Rußpartikel enthalten.

Des Weiteren wurde eine Mischung c) hergestellt durch Aufschmelzen von 70 Gew.-% Zitronensäure-Monohydrat und 30 Gew.-% Carnaubawachs, jeweils bezogen auf die Gesamtmenge dieser Mischung, wobei nach dem Aufschmelzen diese Mischung nach Abkühlen gemahlen und auf eine Korngröße < 125 µm abgesiebt wurde. Hierdurch wird ein erfindungsgemäßes Mischungskonzentrat erhalten. Dieses erfindungsgemäße Mischungskonzentrat gemäß Mischung c) wurde dann als Mastermischung in einer Menge von 14 Gew.-%, bezogen auf die Gesamtmenge der Mischung, mit 86 Gew.-%, bezogen auf die Gesamtmenge der Mischung, einer Wachsmischung, gemäß Mischung a) wie weiter oben beschrieben aus einem Fettsäureamidwachs und Carnaubawachs zugegeben. Die solchermaßen hergestellte Mischung d) wies das Zusatzmittel in einer Menge von etwa 10 Gew.-%, bezogen auf die Gesamtmenge der Mischung, auf. Das Carnaubawachs der Mischung c) war dabei identisch zu dem Carnaubawachs der Mischung a). Die aus dieser Mischung hergestellten gesinterten Formteile wiesen ebenfalls keine Oberflächenflecken auf.

Durch die vorliegende Erfindung wird die Verwendung einer sinterfähigen Pulvermischung zur Verfügung gestellt, mittels welcher gesinterte Formteile herstellbar sind, die auch hohen optischen Ansprüchen gerecht werden.

## Patentansprüche

1. Verwendung einer sinterfähigen Pulvermischung zur Herstellung gesinterter Formteile, wobei die sinterfähige Pulvermischung
- mindestens ein metallisches Pulvermaterial sowie
- eine Mischung und/oder ein Mischungskonzentrat, die
∘ mindestens ein Presshilfsmittel und
∘ mindestens ein Zusatzmittel umfassen, wobei das Zusatzmittel ausgewählt ist aus einer Gruppe von Substanzen, welche freisetzbares Kohlendioxid aufweisen, umfassend organische Carbonsäuren und/oder deren Derivate,
umfasst, wobei das Zusatzmittel ausgewählt ist aus einer Gruppe umfassend Verbindungen mit mindestens drei Carboxygruppen, **dadurch gekennzeichnet, dass** die Pulvermischung zur Verhinderung von Oberflächenflecken verwendet wird, welche Rußpartikel auf gesinterten Formteilen umfassen, die aus metallischem Material hergestellt sind.

2. Verwendung gemäß Anspruch 1, **dadurch gekennzeichnet, dass** das Mischungskonzentrat das Zusatzmittel in einer Menge von 35 Gew.-% bis 90 Gew.-%, bezogen auf die Gesamtmenge des Mischungskonzentrates, aufweist.

3. Verwendung gemäß Anspruch 1 oder 2, **dadurch gekennzeichnet, dass** die Mischung das Zusatzmittel in einer Menge von 1 Gew.-% bis 90 Gew.-%, bezogen auf die Gesamtmenge der Mischung, umfasst.

4. Verwendung gemäß einem der vorhergehenden Ansprüche, **dadurch gekennzeichnet, dass** das Presshilfsmittel ausgewählt ist aus einer Gruppe umfassend Polyvinylacetate, Fettsäurealkohole und/oder deren Salze, Wachse, wachsähnliche Substanzen, Polyethylenglykole, Polyethylenoxide, Esther und/oder Salze von Fettsäuren, Amine, Amide und/oder Amidwachse und/oder deren Salze, einschließlich Fettsäureamide oder Mischungen der genannten Subtanzen.

5. Verwendung gemäß Anspruch 3, **dadurch gekennzeichnet, dass** das Presshilfsmittel Carnaubawachs ist.

6. Verwendung gemäß Anspruch 4, **dadurch gekennzeichnet, dass** diese Carnaubawachs als Presshilfsmittel und Zitronensäure oder deren Derivate als Zusatzmittel umfasst.

7. Verwendung gemäß einem der vorliegenden Ansprüche, **dadurch gekennzeichnet, dass** das Mischungskonzentrat mindestens 50 Gew.-% des Zusatzmittels und mindestens ein Presshilfsmittel, ausgewählt aus einer Gruppe von Verbindungen umfassend Polyvinylacetate, Fettsäurealkohole und/oder deren Salze, Wachse, wachsähnliche Substanzen, Polyethylenglykole, Polyethylenoxide, Esther und/oder Salze von Fettsäuren, Amine, Amide und/oder Amidwachse und/oder deren Salze, einschließlich Fettsäureamide, oder Mischungen der genannten Substanzen, aufweist.

8. Verwendung gemäß einem der vorliegenden Ansprüche, **dadurch gekennzeichnet, dass** das Mischungskonzentrat mindestens 50 Gew.-% Zitronensäure oder deren Derivate, bezogen auf die Gesamtmenge des Mischungskonzentrats, aufweist, wobei die Restmenge gebildet ist aus Carnaubawachs.

9. Verwendung gemäß einem der vorliegenden Ansprüche, **dadurch gekennzeichnet, dass** das mindestens eine metallische Material in einer Menge von mindestens 80 Gew.-% in der Mischung enthalten ist, bezogen auf die Gesamtmenge der Mischung.

10. Verwendung gemäß einem der vorliegenden Ansprüche, **dadurch gekennzeichnet, dass** das mindestens eine Zusatzmittel in einer Menge von 0,005 Gew.-% bis 2 Gew.-%, bezogen auf die Gesamtmenge der sinterfähigen Pulvermischung, in dieser enthalten ist.

## Claims

1. Use of a sinterable powder mixture according for the production of sintered molded parts, wherein the sinterable powder mixture comprises
- at least a metallic powder material as well as
- a mixture and / or mixture concentrate, which comprises
∘ at least one pressing aid and
∘ at least one additive; wherein the additive is selected from a group of substances, which have releasable carbon dioxide, comprising organic carboxylic acids and / or their derivatives,
wherein the additive is selected from a group comprising compounds with at least three carboxy groups, **characterized in that** the powder mixture is used for preventing surface stains, which comprise soot particles on sintered molded parts, which are produced out of metallic material.

2. Use according to claim 1, **characterized in that** the mixture concentrate contains the additive in an amount of 35% by weight to 90% by weight, based on the total amount of the mixture concentrate.

3. Use according to claim 1 or 2, **characterized in that** the mixture comprises the additive in an amount of 1% by weight to 90% by weight, based on the total amount of the mixture concentrate.

4. Use according to one of the preceding claims, **characterized in that** the pressing aid is selected from a group comprising polyvinyl acetates, fatty acid alcohols and / or their salts, waxes, wax-like substances, polyethylene glycols, polyethylene oxides, esters and / or salts of fatty acids, amines, amides and / or amide waxes and / or their salts, including fatty acid amides, or mixtures of the substances mentioned.

5. Use according to claim 4, **characterized in that** the pressing aid is camauba wax.

6. Use according to claim 4, **characterized in that** it comprises camauba wax as pressing aid and citric acid or its derivatives as additives.

7. Use according to one of the preceding claims, **characterized in that** the mixture concentrate contains at least about 50% by weight of the additive and at least one pressing aid, selected from a group comprising polyvinyl acetates, fatty acid alcohols and / or their salts, waxes, wax-like substances, polyethylene glycols, polyethylene oxides, esters and / or salts of fatty acids, amines, amides and / or amide waxes and / or their salts, including fatty acid amides, or mixtures of the substances mentioned.

8. Use according to one of the preceding claims, **characterized in that** the mixture concentrate has at least 50% by weight of citric acid or its derivatives, based on the total amount of the mixture concentrate, the remainder being formed from carnauba wax

9. Use according to one of the preceding claims, **characterized in that** the at least one metallic material is contained in the mixture in an amount of at least 80% by weight, based on the total amount of the mixture.

10. Use according to one of the preceding claims, **characterized in that** the at least one additive is contained in it in an amount of 0.005% by weight to about 2% by weight, based on the total amount of the sinterable mixture.

## Revendications

1. Utilisation d'un mélange de poudre frittable pour la fabrication de pièces moulées frittées, le mélange de poudre frittable comprenant :
- au moins un matériau en poudre métallique, ainsi que
- un mélange et/ou un concentré de mélange, qui comprend :
∘ au moins un adjuvant de pressage et
∘ au moins un additif, l'additif étant choisi dans le groupe de substances qui comprennent du dioxyde de carbone libérable, comprenant des acides carboxyliques organiques et/ou leurs dérivés,
l'additif étant choisi dans un groupe comprenant des composés contenant au moins trois groupes carboxy, **caractérisée en ce que** le mélange de poudre est utilisé pour prévenir des taches de surface, qui comprennent des particules de noir de carbone sur des pièces moulées frittées, qui sont fabriquées en matériau métallique.

2. Utilisation selon la revendication 1, **caractérisée en ce que** le concentré de mélange comprend l'additif en une quantité de 35 % en poids à 90 % en poids, par rapport à la quantité totale du concentré de mélange.

3. Utilisation selon la revendication 1 ou 2, **caractérisée en ce que** le mélange comprend l'additif en une quantité de 1 % en poids à 90 % en poids, par rapport à la quantité totale du mélange.

4. Utilisation selon l'une quelconque des revendications précédentes, **caractérisée en ce que** l'adjuvant de pressage est choisi dans un groupe comprenant les polyacétates de vinyle, les alcools d'acides gras et/ou leurs sels, les cires, les substances cireuses, les polyéthylène glycols, les polyoxydes d'éthylène, les esters et/ou les sels d'acides gras, les aminés, les amides et/ou les cires d'amides et/ou leurs sels, y compris les amides d'acides gras ou les mélanges des substances mentionnées.

5. Utilisation selon la revendication 3, **caractérisée en ce que** l'adjuvant de pressage est de la cire de carnauba.

6. Utilisation selon la revendication 4, **caractérisée en ce que** celui-ci comprend de la cire de carnauba en tant qu'adjuvant de pressage et de l'acide citrique ou ses dérivés en tant qu'additif.

7. Utilisation selon l'une quelconque des revendications précédentes, **caractérisée en ce que** le concentré de mélange comprend au moins 50 % en poids de l'additif et au moins un adjuvant de pressage, choisi dans un groupe de composés comprenant les polyacétates de vinyle, les alcools d'acides gras et/ou leurs sels, les cires, les substances cireuses, les polyéthylène glycols, les polyoxydes d'éthylène, les esters et/ou les sels d'acides gras, les aminés, les amides et/ou les cires d'amides et/ou leurs sels, y compris les amides d'acides gras ou les mélanges des substances mentionnées.

8. Utilisation selon l'une quelconque des revendications précédentes, **caractérisée en ce que** le concentré de mélange comprend au moins 50 % en poids d'acide citrique ou ses dérivés, par rapport à la quantité totale du concentré de mélange, la quantité résiduelle étant formée par de la cire de carnauba.

9. Utilisation selon l'une quelconque des revendications précédentes, **caractérisée en ce que** ledit au moins un matériau métallique est contenu dans le mélange en une quantité d'au moins 80 % en poids, par rapport à la quantité totale du mélange.

10. Utilisation selon l'une quelconque des revendications précédentes, **caractérisée en ce que** ledit au moins un additif est contenu en une quantité de 0,005 % en poids à 2 % en poids, par rapport à la quantité totale du mélange de poudre frittable, dans celui-ci.
